(19) Europäisches Patentamt
European Patent Office
Office européen des brevets

(11) **EP 4 711 727 A1**

(12) **EUROPEAN PATENT APPLICATION**

(43) Date of publication:
**18.03.2026 Bulletin 2026/12**

(51) International Patent Classification (IPC):
**G01J 1/02** (2006.01)

(21) Application number: **24200692.2**

(22) Date of filing: **17.09.2024**

(52) Cooperative Patent Classification (CPC):
**G01J 1/0252; G01J 1/0271;** G01J 2001/0276;
G01J 2001/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Leica Microsystems CMS GmbH**
**35578 Wetzlar (DE)**

(72) Inventors:
• **Schaedel, Matthias**
  **35578 Wetzlar (DE)**
• **Seifert, Roland**
  **35578 Wetzlar (DE)**
• **Birk, Holger**
  **35578 Wetzlar (DE)**

(74) Representative: **Schaumburg und Partner Patentanwälte mbB**
**Mauerkircherstraße 31**
**81679 München (DE)**

(54) **A CLIMATE-CONTROLLING ARRANGEMENT FOR A PHOTODETECTOR UNIT OF AN OPTICAL SYSTEM**

(57) In a first aspect, a climate-controlling arrangement (100, 200) for a photodetector unit (104, 202) of an optical system, in particular a microscope system, is provided. The climate-controlling arrangement (100, 200) comprises an enclosure (102) with an optical window (106) and the photodetector unit (104, 202), which is arranged within the enclosure (102). The climate-controlling arrangement (100, 200) further comprises at least one electrolysis unit (108) comprising a membrane (110) arranged in a wall (112) of the enclosure (102). The electrolysis unit (108) is configured to electrolyse water on a surface of the membrane (110) facing an inside (114) of the enclosure (102). In a further aspect, a method for operating the climate-controlling arrangement (100, 200) is provided.

**Fig. 1**

**Description**

Technical field

The invention relates to a climate-controlling arrangement for a photodetector unit of an optical system with an electrolysis unit. In a further aspect, a respective method for operating the climate-controlling arrangement is provided.

Background

Background noise is a significant challenge for high-sensitivity photodetectors, particularly in applications such as microscopy where detection of single photons may be relevant. This noise can arise from a variety of environmental sources, including thermal noise, electronic interference, and stray light. In microscopes, the detection of weak signals-such as those emitted by fluorescent markers or low-intensity light reflected from small biological samples-requires reducing any background noise as much as possible. Any noise present can obscure these weak signals, reducing the accuracy and reliability of measurements. Even minute amounts of noise can result in false readings, making it difficult to discern fine details or detect subtle changes in the sample under observation.

This can be particularly problematic in highly sensitive experiments where even slight variations in light intensity can impact the results. It is a continuous challenge to design photodetector systems that minimise these background noises while maintaining high sensitivity. This often requires complex shielding, precise alignment, and advanced signal processing techniques. These measures, while necessary, can increase the complexity and cost of the instrumentation, and still may not completely eliminate all sources of noise.

Summary

It is an object to provide an arrangement for a photodetector that enables effective control of environmental influences on the photodetector.

The aforementioned object is achieved by the subject-matter of the independent claims. Advantageous embodiments are defined in the dependent claims and the following description.

In a first aspect, a climate-controlling arrangement for a photodetector unit of an optical system, in particular a microscope system, is provided. The climate-controlling arrangement comprises an enclosure with an optical window and the photodetector unit, which is arranged within the enclosure. The climate-controlling arrangement further comprises at least one electrolysis unit comprising a membrane arranged in a wall of the enclosure. The electrolysis unit is configured to electrolyse water on a surface of the membrane facing an inside of the enclosure.

The climate-controlling arrangement enables providing a climate-controlled space for the photodetector unit. For example, highly sensitive photodetectors frequently are sensitive to environmental or climate parameters such as water vapour and/or temperature. Controlling these parameters may enable prolonging the service life of the photodetector unit as well as reducing undesired influences such as background noise. The electrolysis unit enables controlling a humidity within the enclosure, this is of particular importance when operating at low temperatures.

In particular, the enclosure may have side walls that entirely surround or enclose the photodetector unit within an internal volume of the enclosure. In particular, the enclosure may have a cuboid shape with six side walls. Alternatively or in addition, the enclosure may comprise cylindrical or spherical elements, in particular side walls.

The photodetector unit may be configured to detect photons focussed onto or propagating to the photodetector unit, in particular a respective detector surface, by means of the optical system. The optical window allows light from the optical system to reach the photodetector unit through an enclosure wall. For example, the optical window may be a transparent element, such as a lens. The electrolysis unit is preferably arranged in a side wall of the enclosure such that one side (outside surface) of the membrane faces the outside of the enclosure, and the other side (inside surface) of the membrane faces the internal volume of the enclosure. In particular, the electrolysis unit is configured to reduce a humidity of the internal volume of the enclosure.

The climate-controlling arrangement may further comprise a climate sensor, such as a temperature and/or humidity sensor, in particular, configured to determine the temperature and/or humidity of the internal volume of the enclosure. The climate-controlling arrangement may further comprise or be connected to a control unit configured to carry out a method for operating the climate-controlling arrangement, for example as detailed below.

Preferably, the membrane is a solid polymer electrolyte membrane. This enables a safe and efficient electrolysis of water. Examples of electrolysis membranes and setups are provided by Wang, Cao and Jiao (2022) (PEM water electrolysis for hydrogen production: fundamentals, advances, and prospects. Carbon Neutrality 1:21).

Preferably, the membrane is permeable with respect to protons (H+). This enables removing protons from the lysed water molecules from the inside surface of membrane to the outside surface.

Preferably, the membrane is impermeable with respect to water and/or oxygen (molecules). This enables efficiently controlling the humidity of the inside volume of the enclosure.

Preferably, the enclosure is sealed against water, in particular humidity, ingress. In particular, such that a diffusion rate of water into the enclosure is less than a dehumidification rate of the electrolysis unit. The dehumidification rate of the electrolysis unit is a function of a water electrolysis rate on the inside surface of the membrane and a rate of travel of protons across the membrane to the outside surface of the membrane. Alternatively or additionally, the enclosure of the climate-controlling arrangement may be configured to essentially hinder a gas exchange between the inside volume of the enclosure and the outside. Thus, in any case, the enclosure is not necessarily required to be airtight.

Preferably, the electrolysis unit comprises an electrode, in particular an anode, arranged on a side of the membrane (the internal surface) facing the inside of the enclosure. The inner electrode preferably acts as a catalyst for the electrolysis.

Preferably, the electrolysis unit comprises an electrode, in particular a cathode, arranged on a side of the membrane (the outside surface) facing the outside of the enclosure. Both electrodes should be permeable for protons. Porous platinum, carbon- or semiconductor based electrodes could be used, for example.

Preferably, the membrane of the electrolysis unit is arranged in one of the side walls of the enclosure such that the electrolysis unit is in proximity to a cooled photodetector, or that the electrolysis unit is at a position at which an air circulation within the enclosure is at a maximum or at least 70% of the maximum air circulation within the enclosure. This enables an efficient dehumidification of the internal volume of the enclosure. In particular, the air circulation within the enclosure may be generated from passive convection due to temperature differences within the enclosure. The climate-controlling arrangement preferably does not comprise elements for forced air circulation, such as fans, in or on the enclosure, due to vibrations that may be generated by these elements.

Preferably, the internal volume of the enclosure is partial free space. The partially free space may be air filled, for example. In particular, the internal volume of the enclosure may be in a range from 100ml to 500ml. It is particularly preferred that the free space is reduced as much as possible in particular to reduce the absolute amount of water vapour that can accumulate within the enclosure as humidity. This enables a faster dehumidification. In particular, the inside surface of the membrane faces or has access to the internal volume of the enclosure. In particular, the photodetector unit is arranged in the internal volume of the enclosure.

Preferably, the climate-controlling arrangement comprises a cooling unit configured to cool at least the photodetector unit. In particular, the climate-controlling arrangement may be a cooling arrangement if it comprises at least the cooling unit. The cooling unit enables controlling, in particular reducing, the temperature within the enclosure. For example, the cooling unit may be configured to cool a detector surface of the photodetector unit. For example, the cooling unit may comprise a heat exchanger or a heat sink that is configured to be cooled and that is arranged within the enclosure. The heat exchanger or the heat sink may be in contact with the photodetector unit. The cooling unit may further comprise heat dissipating elements, preferably outside the enclosure. Heat may be transferred from the heat exchanger or the heat sink to the heat dissipating elements, for example by means of a cooling fluid.

In a particular example, the detector surface may be a photocathode of the photodetector unit. In this particular example, undesired background noise may be halved for every 3.5°C temperature reduction. In another particular example, the detector surface of the photodetector unit may be cooled to -35°C. These temperatures regularly are below a dew point of a space the climate-controlling arrangement or the optical system are positioned in, even if the space is climate-controlled, such as an air-conditioned laboratory. Thus, condensation may form on these cooled elements, which may lead to an electrical breakdown or a short circuit. The combination of the electrolysis unit and the cooling unit in the climate-controlling arrangement therefore enables sufficiently cooling the photodetector unit to particularly low temperatures without the risk of electrical breakdowns or short circuits. In addition, condensation may form on optical windows that have a reduced temperature due to their proximity to cooled elements, for example. Such condensation may lead to a undesirable reduced or scattered transmission of photons through the optical window.

Preferably, the cooling unit comprises a thermoelectric cooling element such as a Peltier element. A cool side of the Peltier element may be in contact with the photodetector unit. A warm side of the Peltier element may be in contact with a heat sink or a heat exchanger of the cooling unit, for example. In a particular embodiment, the cooling unit may comprise several Peltier elements that are in contact with each other. For example, a cool side of a first Peltier element may cool the detector surface on an inside of the photodetector unit and a warm side of the first Peltier element may be in direct contact with a cool side of a second Peltier element being exposed to the free space of the internal volume of the enclosure.

Preferably, the cooling unit comprises a heat exchanger and/or a compressor arranged outside of the enclosure and configured to provide a cool cooling liquid. Separating the heat exchanger and the compressor from the enclosure enables reducing any vibrations of the enclosure, in particular the photodetector unit. The heat exchanger may act as a heat dissipating element for removing the heat from the inside of the enclosure.

Preferably, the photodetector unit comprises a high-voltage circuit. The climate-controlling arrangement enables using particular high-voltage circuits without the risk of electrical breakdowns. For example, a high-voltage circuit may include voltage levels of up to 8000 V or higher. In particular, the high-voltage circuit may supply high-voltages to detector elements such as a photocathode of the photodetector unit. In particular, the high-voltage circuit is arranged within the enclosure.

Preferably, the photodetector unit comprises a vacuum tube photomultiplier, a silicon photomultiplier, a hybrid photo detector (vacuum tube and semiconductor), a photodiode, a single photon avalanche detector (SPAD), an array of SPADs or silicon photomultipliers, or a CMOS camera.

Preferably, the enclosure comprises a desiccant. This enables reducing and buffering humidity within the enclosure. For example, the desiccant may be a silica gel. Preferably, the desiccant is arranged within the enclosure.

In a further aspect, a method for operating a climate-controlling arrangement for the photodetector unit of the optical system is provided. The method comprises determining at least one environmental parameter within the enclosure of the climate-controlling arrangement. The method further comprises operating the electrolysis unit and/or the cooling unit of the climate-controlling arrangement based on the at least one environmental parameter. The method enables controlling the environmental parameters within the enclosure such that the photodetector unit of the optical system may be operated at optimal conditions, in particular with high sensitivity and low background noise.

The environmental parameter may be a temperature, humidity or dew point, in particular of the internal volume of the enclosure. The environmental parameter may be determined by means of a respective sensor of the climate-controlling arrangement.

In particular, the electrolysis unit and/or the cooling unit of the climate-controlling arrangement may be operated such that a particular temperature and a particular humidity are maintained, which are in an optimal range for the photodetector unit. For example, the electrolysis unit may be turned on until a set humidity value is reached and a set cooling temperature of the cooling unit is controlled based on a determined humidity within the enclosure.

The method has the same advantages as the climate-controlling arrangement. Further, the method may be supplemented with the features of the climate-controlling arrangement described in this document, in particular, the features of the dependent claims of the climate-controlling arrangement. Moreover, the climate-controlling arrangement may be configured to carry out the method.

Short Description of the Figures

Hereinafter, specific embodiments are described referring to the drawings, wherein:

Figure 1 is a schematic view of a first climate-controlling arrangement, and

Figure 2 is a schematic view of a second climate-controlling arrangement.

Detailed Description

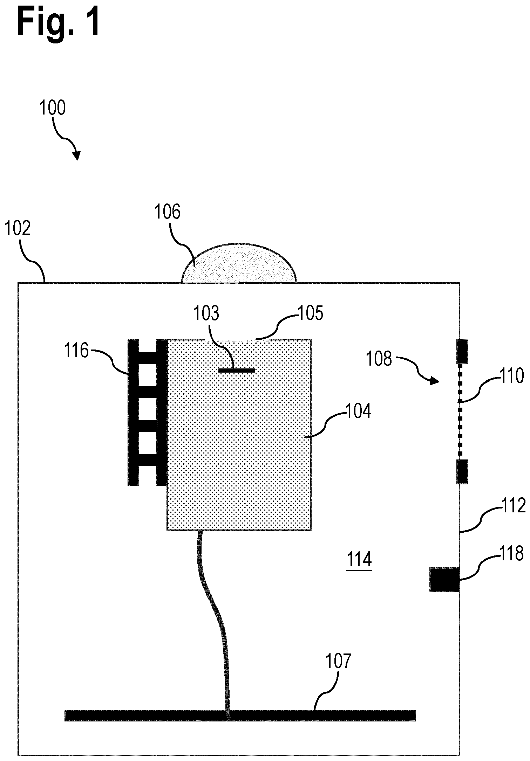

Figure 1 is a schematic view, in particular a cross section, of a first climate-controlling arrangement 100 of an optical system. The arrangement 100 comprises an enclosure 102, which encloses a photodetector unit 104. The enclosure 102 comprises an optical window 106, which enables light to pass from an outside of the enclosure 102 to an internal volume 114 of the enclosure 102. In particular, the optical window 106 enables light to travel towards the photodetector unit 104 such that the light can be detected on a detector surface 103 of the photodetector unit 104. In particular, the photodetector unit 104 may have an optical window 105, which enables photon to travel towards the detector surface 103, in particular a photocathode, which is arranged inside a vacuum tube.

The photodetector unit 104 may be a hybrid photodetector, for example, comprising a high-voltage photocathode and an avalanche diode. The photodetector unit 104, specifically its photocathode, may have a high-voltage supply 107 connected to the photodetector unit 104.

The arrangement 100 further comprises an electrolysis unit 108 with a membrane 110 arranged in a wall 112 of the enclosure. The membrane may be a solid polymer electrolyte membrane, in particular. The electrolysis unit 108 is configured to electrolyse water on a surface of the membrane facing an internal volume 114 of the enclosure 102. The membrane 110 is permeable to protons that are generated from the lysis of water. The protons may therefore pass through the membrane 110 and on an outside surface of the membrane 110 combine with oxygen atoms to form water. Thus, the electrolysis unit 108 enables removing water molecules from the internal volume 114 of the enclosure 102 to the outside of the enclosure 102. This reduces the humidity in the internal volume 114 of the enclosure 102.

For example, on the inside surface of the membrane 110, the following reaction takes place:

$$H_2O \rightarrow 2H^+ + \frac{1}{2}O_2 + 2e^-$$, with the protons passing through the membrane 110 to the outside surface. On the outside surface of the membrane 110, the following reaction takes place:

$$2H^+ + \frac{1}{2}O_2 + 2e^- \rightarrow H_2O.$$

The reduction in humidity by means of the electrolysis unit 108 enables the correct functioning of photodetector unit 104, in particular, it avoids electrical breakdowns or short circuits in the high-voltage supply 107 or the photodetector unit 104 due to high humidity in the internal volume 114.

The arrangement 100 may optionally comprise a cooling unit 116 configured to cool the photodetector unit 104. The cooling unit 116 may comprise a Peltier element, for example. Generally, cooling the photodetector unit 104, specifically its photocathode, greatly reduces background noise of the photodetector unit 104. Especially in combination with the electrolysis unit 108, the cooling unit 116 can be operated effectively. Specifically, a reduction of the humidity of the internal volume 114 by means of the electrolysis unit 108 enables operating the cooling unit 116 at very low temperatures whilst avoiding electrical breakdowns or short circuits due to condensation on the cooled parts, for example the high-voltage photocathode, of the photodetector unit 104.

The electrolysis unit 108 further avoids condensation on the optical window 106 or the optical window 105, which, being close to the cooled photodetector unit 104, may be similarly cold and therefore prone to condensation. Condensation on the optical window 106 and/or 105 may cause an undesired refraction of light traveling towards the photodetector unit 104.

The example according to Fig. 1 may in particular comprise a vacuum tube. A typical cooling temperature of the unit 104 is 18°C. Reducing its temperature from 25°C to 18°C will reduce dark counts by a factor of 4. By reducing the humidity further cooling and noise reduction would be feasible.

Specifically, the electrolysis unit 108 may be configured to or be operated such that the humidity of the internal volume 114 is reduced to reduce the dew point of the internal volume 114 and allow the cooling unit 116 to cool to lower temperatures whilst avoiding condensation.

The arrangement 100 may optionally comprise a sensor 118 configured to determine a humidity, temperature and/or dew point of the internal volume 114 of the enclosure 102.

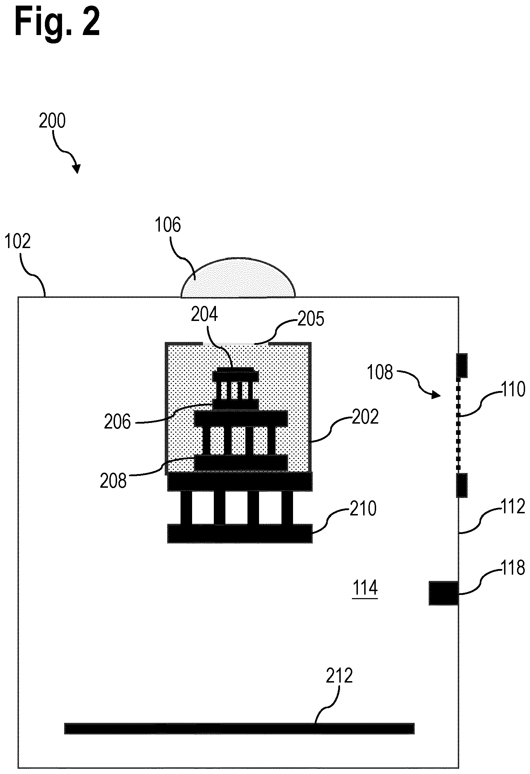

Figure 2 is a schematic view, in particular a cross section, of a second climate-controlling arrangement 200 of an optical system. Elements with the same function or construction are indicated by the same reference signs. The arrangement 100 comprises the enclosure 102, the optical window 106 and the optical window 105, and electrolysis unit 108.

The arrangement 200 may comprise a photodetector unit 202, which may comprise a silicon photomultiplier. The detector surface 204 of the photodetector unit 202 is cooled by means of a first Peltier element 206 of a cooling unit of the arrangement 200. The first Peltier element 206 may be cooled by a second Peltier element 208, which is cooled by a third Peltier element 210. The Peltier elements 206, 208 may be cast in the photodetector unit 202 together with the detector surface 204, whilst the Peltier element 210, especially its cool side, may be at least partially exposed to the internal volume 114 of the enclosure 102. This cast in construction may avoid electrical breakdowns or short circuits. However, the cooled detector surface 204 is regularly cooled to -35°C and in close proximity to the optical window 106 and an optical window 205. This proximity may result in the optical windows 106, 205 being similarly cool and prone to condensation. Thus, the reduction in the humidity of the internal volume 114 by means of the electrolysis unit 108 of arrangement 200 may enable avoiding condensation on elements within an optical path.

The example of Fig. 2 may in particular comprise a silicon photomultiplier. This detector surface 204 is regularly cooled to -35°C. Further, it may be sealed within the unit 202, which is filled with dry nitrogen. The optical window 205 of unit 202 usually in close proximity of the detector surface 204 and therefore frequently be cooler than the rest of the unit 202. This results in the optical window 205 being prone to condensation. The temperature of housing 202 may also be controlled using the Peltier element 210. Thus, lower humidity within the internal volume 114 would allow lowering the temperature of the unit 202.

In addition, the arrangement 200 may comprise electronic circuits 212, for example, for controlling the photodetector unit 202, which may be prone to electrical breakdowns or short circuits under high humidity. Thus, the reduction in the humidity of the internal volume 114 by means of the electrolysis unit 108 of arrangement 200 may enable avoiding electrical breakdowns or short circuits of the electronic circuits 212.

The climate-controlling arrangements 100, 200 may be controlled by a method, which initially determines an environmental parameter, such as a temperature, a humidity, or a dew point of the internal volume 114. The environmental parameter may be determined by means of the sensor 118, for example. In a next step, the cooling unit 116, 206, 208, 210 and/or the electrolysis unit 108 may be operated based on the determined environmental parameter.

For example, when starting up the optical systems of the arrangements 100, 200, environmental parameters of the internal volume 114 may be determined. In case the humidity and/or temperature is determined to be high and a dew point is determined to be similarly high, only the electrolysis unit 108 is turned on to initially dehumidify the internal volume 114. Only when or if the humidity or dew point falls below a set point, the cooling unit 116, 206, 208, 210 is turned on to start cooling the respective photodetector units 104, 202, 204. This avoids condensation due to cooling of the photodetector units 104, 202, 204 under high humidity.

The climate-controlling arrangements 100, 200 may be part of an optical system, specific of a light microscope. For example, detection light originating from a sample under investigation may be received by the optical system of the microscope and directed towards the photodetector units 104, 202, 204 through the optical windows 106, 105, 205. By means of the photodetector units 104, 202, 204, imaging data of the sample under investigation may be generated. The climate-controlling arrangements 100, 200 enable generating high-quality and low-noise imaging data of the sample.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Reference signs

| 100, 200 | Climate-controlling arrangement |
| 102 | Enclosure |
| 103, 204 | Detector surface |
| 104, 202 | Photodetector unit |
| 105, 106, 205 | Optical window |
| 107 | High-voltage supply |
| 108 | Electrolysis unit |
| 110 | Membrane |
| 112 | Side wall of enclosure |
| 114 | Internal volume of enclosure |
| 116, 206, 208, 210 | Cooling unit |
| 118 | Sensor |
| 212 | Electronic circuit |

**Claims**

1. A climate-controlling arrangement (100, 200) for a photodetector unit (104, 202) of an optical system comprising:

   an enclosure (102) with an optical window (106), the photodetector unit (104, 202) arranged within the enclosure (102), and
   at least one electrolysis unit (108) comprising a membrane (110) arranged in a wall (112) of the enclosure (102), wherein the electrolysis unit (108) is configured to electrolyse water on a surface of the membrane (110) facing an inside (114) of the enclosure (102).

2. The climate-controlling arrangement according to claim 1, wherein the membrane (110) is a solid polymer electrolyte membrane.

3. The climate-controlling arrangement according to one of the preceding claims, wherein the membrane (110) is permeable with respect to protons.

4. The climate-controlling arrangement according to one of the preceding claims, wherein the membrane (110) is impermeable with respect to water and/or oxygen.

5. The climate-controlling arrangement according to one of the preceding claims, wherein the enclosure (102) is sealed against water ingress, in particular such that a diffusion rate of water into the enclosure (102) is less than a dehumidification rate of the electrolysis unit (108).

6. The climate-controlling arrangement according to one of the preceding claims, wherein the electrolysis unit (108) comprises an electrode arranged on a side of the membrane (110) facing the inside (114) of the enclosure (102).

7. The climate-controlling arrangement according to one of the preceding claims, wherein the electrolysis unit (108) comprises an electrode arranged on a side of the membrane (110) facing the outside of the enclosure (102).

8. The climate-controlling arrangement according to one of the preceding claims, wherein the membrane (110) of the electrolysis unit (108) is arranged in the wall (112) of the enclosure (102) such that the electrolysis unit (108) is in proximity to a cooled photodetector (104, 202), or that the electrolysis unit (108) is at a position at which an air circulation within the enclosure (102) is at a maximum or at least 70% of the maximum air circulation within the enclosure (102).

9. The climate-controlling arrangement according to one of the preceding claims, wherein the internal volume (114) of the enclosure (102) is partial free space.

10. The climate-controlling arrangement according to one of the preceding claims, comprising a cooling unit (116, 206, 208, 210) configured to cool at least the photodetector unit (104, 202).

11. The climate-controlling arrangement according to claim 10, wherein the cooling unit (116, 206, 208, 210) comprises a thermoelectric cooling element.

12. The climate-controlling arrangement according to one of the preceding claims 10 and 11, wherein the cooling unit (116, 206, 208, 210) comprises a heat exchanger and/or a compressor arranged outside of the enclosure (102) and configured to provide a cool cooling liquid.

13. The climate-controlling arrangement according to one of the preceding claims, wherein the photodetector unit (104, 202) comprises a high-voltage circuit (107).

**14.** The climate-controlling arrangement according to one of the preceding claims, wherein the photodetector unit (102, 202) comprises a vacuum tube photomultiplier, a silicon photomultiplier, a hybrid photo detector, a photodiode, a single photon avalanche detector, an array of SPADs or silicon photomultipliers, or a CMOS camera.

**15.** The climate-controlling arrangement according to one of the preceding claims, wherein the enclosure (102) comprises a desiccant.

**16.** A method for operating a climate-controlling arrangement for a photodetector unit (102, 202) of an optical system according to one of the preceding claims, wherein the method comprises the following steps:

determining at least one environmental parameter within the enclosure (102) of the climate-controlling arrangement (100, 200), operating the electrolysis unit (108) and/or the cooling unit (116, 206, 208, 210) of the climate-controlling arrangement (100, 200) based on the at least one environmental parameter.

# Fig. 1

# Fig. 2

## EUROPEAN SEARCH REPORT

**Application Number**

EP 24 20 0692

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 143449 A (HAMAMATSU PHOTONICS KK) 16 May 2003 (2003-05-16) | 1-14,16 | INV. G01J1/02 |
| Y | * figures 1, 4, 5, 6, 10 * * paragraphs [0009], [0042] - [0045], [0049], [0058] - [0059] * * paragraphs [0068] - [0069], [0103] - [0105] * ----- | 15 | |
| X | JP 2009 224957 A (NIKON CORP) 1 October 2009 (2009-10-01) | 1,3, 5-11,13, 14 | |
| Y | * figure 1 * * paragraphs [0012], [0013], [0015], [0025] * ----- | 15 | |
| Y | JP 2003 172860 A (NIKON CORP) 20 June 2003 (2003-06-20) * paragraphs [0002], [0012] * ----- | 15 | |

**TECHNICAL FIELDS SEARCHED (IPC)**

G01J

The present search report has been drawn up for all claims

| Place of search | Date of completion of the search | Examiner |
|---|---|---|
| Munich | 10 February 2025 | Parise, Berengere |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0692

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | Publication date | Patent family member(s) | Publication date |
|---|---|---|---|
| JP 2003143449 A | 16-05-2003 | NONE | |
| JP 2009224957 A | 01-10-2009 | NONE | |
| JP 2003172860 A | 20-06-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG** ; **CAO** ; **JIAO**. PEM water electrolysis for hydrogen production: fundamentals, advances, and prospects. *Carbon Neutrality*, 2022, vol. 1, 21